# EUROPÄISCHE PATENTANMELDUNG

(11) **EP 0 812 738 A1**
(43) Veröffentlichungstag der Anmeldung: **17.12.1997**
(21) Anmeldenummer: 97109093.1
(22) Anmeldetag: 05.06.1997
(51) Int. Cl.: B60R 21/20

(54) **Airbagmodul**

(30) Priorität: 13.06.1996 DE 19623578
(71) Anmelder: ADAM OPEL AG, 65423 Rüsselsheim (DE)
(72) Erfinder: Ulrich, Rick, Dipl.-Ing., 55595 Roxheim (DE)
(74) Vertreter: Kümpfel, Heinz, Dipl.-Ing.

(57) **Zusammenfassung**

Ein Airbagmodul weist ein Gehäuse auf, welches aus einem Luftsack-Gehäuseteil (18), einem Diffusorraum (6) und einem Gasgenerator-Raumteil (19) besteht. Das Gasgenerator-Raumteil (19) ist als druckfester Gasgenerator-Raum (8') ausgebildet, so daß ein zusätzliches Gasgenerator-Gehäuse entfallen kann. Das Airbagmodul kann so leicht und kompakt hergestellt werden.

## Beschreibung

Die Erfindung betrifft ein Airbagmodul insbesondere für einen Frontairbag zum Schutz für Insassen in Kraftfahrzeugen mit einem im Fahrzeug stationär anbringbaren Airbagmodul-Gehäuse mit in Einbaulage dem Insassen zugewandter Öffnung, einem innerhalb des Airbagmodul-Gehäuses gelagerten gefalteten Luftsack und einem vom Airbagmodul-Gehäuse gebildeten Raum für die Aufnahme eines Gasgenerators.

Ein solches Airbagmodul ist in DE 42 23 237 beschrieben. Bei diesem bekannten Airbagmodul umfaßt ein wannenförmiges Modulgehäuse auch ein rohrförmiges Gehäuse, in welches von einer Stirnseite her das Gehäuse eines patronenförmigen Gasgenerators einschiebbar ist. Das Gehäuse des Gasgenerators ist als rohrförmige druckfeste Hülse ausgeführt. Das diese Hülse umfassende rohrförmige Gehäuse ist mit Durchbrüchen zum Gassack hin versehen. Eine solche Bauweise ermöglicht zwar eine vorteilhafte Montage des Airbagmoduls, sie ist aber relativ materialaufwendig und damit schwer und kostenintensiv.

Aufgabe der Erfindung ist es, ein Airbagmodul der eingangs genannten Art so zu verbessern, daß es leichter und mit geringerem Volumen ausgeführt werden kann sowie weniger Teile aufweist, so daß es einen kleineren Einbauraum erfordert, geringere Massekräfte verursacht und kostengünstiger herstellbar ist.

Erfindungsgemäß wird diese Aufgabe dadurch gelöst, daß das Airbagmodul-Gehäuse einen Gasgenerator-Raum umfaßt.

Damit ist ein gesondertes Gehäuse für den Gasgenerator nicht erforderlich. Eine doppelte Wandung im Bereich des Gasgenerators entfällt. Die gasbildenden Komponenten werden direkt vom Gehäuse des Airbagmoduls aufgenommen. Das Gehäuse des Airbagmoduls selbst bildet auch den Druckraum des Gasgenerators. Eine besondere druckfeste vom Gehäuse des Airbagmoduls umschlossene Hülse für den Gasgenerator ist nicht erforderlich.

In vorteilhafter Weise besteht das Gehäuse des Airbagmoduls aus einem druckfesten gießbaren Material wie z. B. Leichtmetall oder einem faserverstärkten Kunstharz.

Bei einer solchen Ausführung kann das Gehäuse einschließlich des Gehäuses für den Gasgenerator einstückig ausgeführt werden. Es wird somit eine besonders kompakte Konstruktion des Airbagmoduls möglich.

Das Gehäuse des Airbagmoduls kann auch aus einem den Gasgenerator-Raum bildenden Gasgenerator-Raumteil und einem Luftsack-Gehäuseteil zusammengesetzt sein, wobei das den Gasgenerator-Raum bildenden Gasgenerator-Raumteil mit dem Luftsack-Gehäuseteil unlösbar oder lösbar verbunden sein kann.

Durch eine solche Ausführungsweise ist es leicht möglich, die unterschiedlichen Beanspruchungen der Gehäuseteile durch die Wahl geeigneter unterschiedlicher Werkstoffe zu beherrschen.

Besonders vorteilhaft kann es sein, wenn die getrennten Gehäuseteile an einem gemeinsamen Strukturträger des Kraftfahrzeuges befestigt und so funktionswirksam miteinander verbunden sind.

Ausführungsbeispiele der Erfindung sind nachstehend anhand von Zeichnungen näher beschrieben. Es zeigen:
- Fig. 1:: ein Gehäuse eines Airbagmoduls im Schnitt;
- Fig. 2:: einen Schnitt entlang der Linie A - A in Fig. 1;
- Fig. 3:: ein weiteres Gehäuse eines Airbagmoduls im Schnitt;
- Fig. 4:: einen Schnitt entlang der Linie A - A in Fig. 3;
- Fig. 5:: einen Schnitt entlang der Linie B - B in Fig. 3;
- Fig. 6 und Fig. 7:: jeweils einen Schnitt durch ein Airbagmodul-Gehäuse weiterer Ausführungsbeispiele.

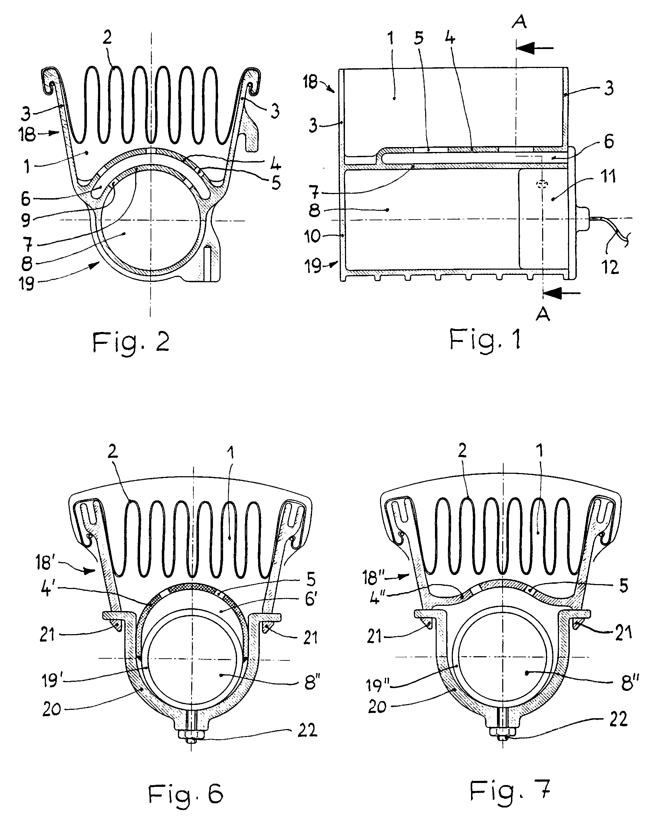

Das Airbagmodul-Gehäuse nach Fig. 1 und Fig. 2 umfaßt einen nach oben offenen Raum 1 für die Aufnahme eines gefalteten Luftsackes 2 und bildet so ein Luftsack-Gehäuseteil 18. Der Raum 1 ist seitlich begrenzt durch Wände 3. Der Boden des Raumes 1 ist gebildet von einer Diffusorwand 4 mit Diffusoröffnungen 5. Die Diffusorwand 4 begrenzt einen Diffusorraum 6. Der Diffusorraum 6 ist durch eine Gasgenerator-Wand 7 von einem einen Gasgenerator-Raum 8 enthaltenen Gasgenerator-Raumteil 19 abgetrennt. Die Gasgenerator-Wand 7 ist mit Gasdurchtrittsöffnungen 9 versehen. Die eine Stirnseite des Gasgenerator-Raumes 8 ist mit einer gehäusefesten Stirnwand 10 verschlossen. Die andere Stirnseite des Gasgenerator-Raumes 8 ist verschlossen durch eine mit dem Airbagmodul-Gehäuse verbundene Anzündeinheit 11. Die Anzündeinheit 11 kann an dem Airbagmodul-Gehäuse mittels Schrauben, durch Kleben oder durch sonstige Befestigungsmittel befestigt sein. Die Anzündeinheit 11 ist über eine elektrische Leitung 12 mit einem Airbagmodul-Auslösesensor verbunden. Im Gasgenerator-Raum 8 befindet sich ein zündfähiger Festtreibstoff z. B. in Pelletform. Die Pellets können von einem leichten sack- oder tütenförmigen Füllbehälter und evtl. von einem Filtermaterial umgeben sein. Ein zusätzlicher in das Airbagmodul-Gehäuse einbringbares Gasgenerator-Gehäuse ist nicht erforderlich, da dies durch den Gasgenerator-Raum 8 im Gasgenerator-Raumteil 19 ersetzt ist.

Bei Auslösung des Airbags wird über die Leitung 12 ein Zündsignal zu der Anzündeinheit 11 geleitet. Die Anzündeinheit 11 zündet in an sich bekannter Weise den benachbart im Gasgenerator-Raum 8 befindlichen Treibstoff, der beim Abbrennen ein Treibgas erzeugt, welches durch die Gasdurchtrittsöffnungen 9 in den Diffusorraum 6 und von diesem verteilt durch die Diffusoröffnungen 5 in den Luftsack 2 gelangt. Der Luftsack 2 wird somit entfaltet und aufgeblasen.

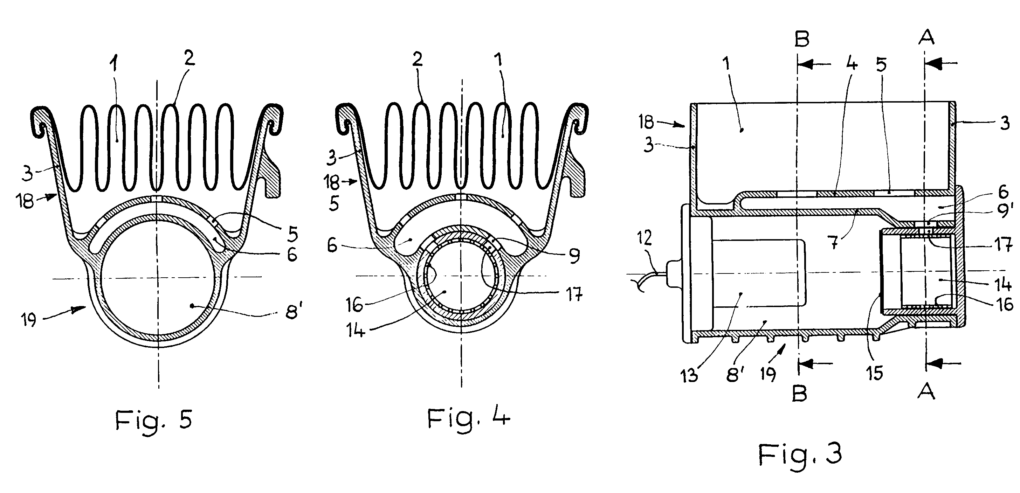

Ein weiteres Ausführungsbeispiel zeigen die Fig. 3 bis 5. Bei diesem Ausführungsbeispiel sind für funktionsgleiche Teile die gleichen Bezugszeichen wie bei dem vorbeschriebenen Ausführungsbeispiel benutzt. Im folgenden wird nur auf die abweichenden Merkmale eingegangen. Anstelle eines Gasgenerators mit Festtreibstoff zur Generierung des Treibgases für den Luftsack 2 findet hier ein Hybrid-Gasgenerator Verwendung. Das Gasgenerator-Raum 8' ist an der einen Seite mit einer Zünd- und Heizeinheit 13 verschlossen. Die andere Seite des Gasgenerator-Raumes 8' ist verschlossen durch eine Ventileinheit 14 mit einer Berstscheibe 15 und einem Filter 16. Die Zünd- und Heizeinheit 13 sowie die Ventileinheit 14 sind durch Schrauben oder sonstige Befestigungsmittel fest mit dem Airbagmodul-Gehäuse verbunden. Die Ventileinheit 14 weist Übertrittsöffnungen 17 zu Gasdurchtrittsöffnungen 9' in der Gasgenerator-Wand 7 auf. Der Gasgenerator-Raum 8' ist gefüllt mit einem hochkomprimierten Gas. Um ein Diffundieren des Gases durch die Wandung des Airbagmodul-Gehäuses zu verhindern, kann bei Erfordernis, z. B. wenn das Airbagmodul-Gehäuse aus Kunststoff ist, die Innenwand des Gasgenerator-Raumes 8' mit einer Gassperrschicht versehen sein. Die Gassperrschicht kann z. B. durch eine aufgedampfte Metallschicht gebildet sein. Ein besonderes Gasgenerator-Gehäuse, welches in das Airbagmodul-Gehäuse einbringbar ist, ist neben dem Gasgenerator-Raumteil 19 nicht erforderlich.

Bei Auslösen des Airbags wird über die Leitung 12 ein Zündsignal zu der Zünd- und Heizeinheit 13 geleitet. Die Zünd- und Heizeinheit 13 erhöht in an sich bekannter Weise den Druck des Gases innerhalb des Gasgenerator-Raumes 8' über den Berstdruck der Berstscheibe 15. In der Folge tritt das Gas durch die Übertrittsöffnung 17 und die Gasdurchtrittsöffnungen 9' in den Diffusorraum 6 und von diesem durch die Diffusoröffnungen 5 in den Luftsack 2, der damit aufgeblasen wird.

Ein weitere Ausführungsform der Erfindung zeigt Fig. 6. Dieses Airbagmodul-Gehäuse ist zusammengesetzt aus einem wannenförmigen Luftsack-Gehäuseteil 18', einem rohrförmigen den Gasgenerator-Raum 8'' bildenden Gasgenerator-Raumteil 19' und einem im Querschnitt sichelförmigen Diffusorraum 6'. Der Diffusorraum 6' ist durch eine mit dem Gasgenerator-Raumteil 19' fest verbundene Diffusorwand 4, mit Diffusoröffnungen 5 gebildet. Sowohl das Luftsack-Gehäuseteil 18' als auch das Gasgenerator-Raumteil 19' mit dem Diffusorraum 6' sind an einem Strukturquerträger 20 des Kraftfahrzeuges lösbar befestigt und bilden gemeinsam das Airbagmodul-Gehäuse. Das Luftsack-Gehäuseteil 18' ist durch einklipsbare Haken 21 und das Gasgenerator-Raumteil 19' durch eine Schraube 22 mit dem Strukturquerträger 20 verbunden. Ein besonderes zusätzliches Gehäuse für einen Gasgenerator ist nicht erforderlich, da dieses vom Gasgenerator-Raumteil 19' gebildet ist.

Fig. 7 zeigt ein Ausführungsbeispiel, bei dem ein zusammengesetztes Airbagmodul-Gehäuse ein Luftsack-Gehäuseteil 18'' aufweist, das an seinem Boden eine Diffusorwand 4'' mit Diffusoröffnungen 5 trägt. Dieses Luftsack-Gehäuseteil 18'' ist mit Haken 21 an einem Strukturquerträger 20 festgeklipst. Am Strukturquerträger 20 ist mit einer Schraube 22 ein Gasgenerator-Raumteil 19'' unterhalb der Diffusorwand 4'' befestigt. Auch hier bedarf es keines zusätzliches Gehäuses für einen Gasgenerator, da dieses durch Gasgenerator-Raumteil 19'' gebildet ist.

Der Vorteil der Erfindung ist somit darin zu sehen, daß die bisher übliche doppelte Wandung am Gasgenerator eines Airbagmoduls entfallen kann und damit Material, Gewicht und Bauraum eingespart wird.

## Patentansprüche

1. Airbagmodul insbesondere für einen Frontairbag zum Schutz für Insassen in Kraftfahrzeugen mit einem im Fahrzeug stationär anbringbaren Airbagmodul-Gehäuse mit in Einbaulage dem Insassen zugewandter Öffnung, einem innerhalb des Airbagmodul-Gehäuses gelagerten gefalteten Luftsack und einem vom Airbagmodul-Gehäuse gebildeten Raum für die Aufnahme eines Gasgenerators, **dadurch gekennzeichnet**, daß das Airbagmodul-Gehäuse einen Gasgenerator-Raum (8, 8', 8'') umfaßt.

2. Airbagmodul nach Anspruch 1, **dadurch gekennzeichnet**, daß das Airbagmodul-Gehäuse aus einem druckfesten gießbaren Werkstoff besteht.

3. Airbagmodul nach Anspruch 1 und 2, **dadurch gekennzeichnet**, daß das Airbagmodul-Gehäuse aus einem den Gasgenerator-Raum (8, 8') bildenden Gasgenerator-Raumteil (19) und einem Luftsack-Gehäuseteil (18) besteht, die unlösbar miteinander verbunden sind.

4. Airbagmodul nach Anspruch 1 und 2, **dadurch gekennzeichnet**, daß das Airbagmodul-Gehäuse aus einem den Gasgenerator-Raum (8'') bildenden Gasgenerator-Raumteil (19', 19'') und einem Luftsack-Gehäuseteil (18', 18'') besteht, die lösbar miteinander verbunden sind.

5. Airbagmodul nach Anspruch 4, **dadurch gekennzeichnet**, daß das Gasgenerator-Raumteil (19', 19'') und das Luftsack-Gehäuseteil (18', 18'') verbunden sind über einen fahrzeugfesten Strukturquerträger (20).
